# EUROPEAN PATENT SPECIFICATION

(11) **EP 3 240 080 B1**
(45) Date of publication and mention of the grant of the patent: **19.12.2018**
(21) Application number: 16167054.2
(22) Date of filing: 26.04.2016
(51) Int. Cl.: H01M 8/0612, H01M 8/0662, H01M 8/04082, H01M 8/04228, H01M 8/124

(54) **FUEL CELL DEVICE**
BRENNSTOFFZELLENVORRICHTUNG
DISPOSITIF DE PILE À COMBUSTIBLE

(43) Date of publication of application: 01.11.2017
(73) Proprietor: AISIN SEIKI KABUSHIKI KAISHA, Kariya-shi Aichi-ken 448-8650 (JP); ROBERT BOSCH GMBH, 70469 Stuttgart (DE)
(72) Inventor: Kuwaba, Koichi, Aichi-ken, Aichi 448-8650 (JP); Endo, Satoshi, Aichi-ken, Aichi 448-8650 (JP); Friede, Wolfgang, 71384 Weinstadt (DE)
(74) Representative: Daub, Thomas

(56) References cited:
- EP-A2- 2 487 742
- JP-A- 2010 116 304
- US-A1- 2003 003 332
- US-A1- 2003 072 978
- US-A1- 2016 036 078

## Description

### Prior art

Fuel cell device, which is provided to be operated with a fluidic fuel, with a desulfurization unit, which is provided to desulfurize the fuel at least partially, with a reformer unit, which is provided for generating at least one fuel gas, and with a fuel cell unit, is already known. EP2487742 A2 describes a fuel cell system fed with fluidic fuel, having a desulfurization unit and a reformer unit.

### Disclosure of the invention

The invention is based on a fuel cell device, which is provided to be operated with a fluidic fuel, with a desulfurization unit, which is provided to desulfurize the fuel at least partially, with a reformer unit, which is provided for generating at least one fuel gas, and with a fuel cell as defined in the appended claims.

It is proposed that the desulfurization unit is provided for at least limiting a transfer of at least one noxious gas from the desulfurization unit into the reformer unit and/or into the fuel cell unit at least when shutting down the fuel cell unit.

In this context, by a "fuel cell device" is to be understood in particular a functional component, in particular a structural and/or functioning component of a fuel cell system. In this context, a "fuel cell system" is to be understood as a system provided for stationary and/or mobile generation of in particular electrical and/or thermal energy by using at least one fuel cell unit. "Provided" is to be understood in particular as specifically programmed, designed and/or equipped. By an object being provided for a certain function, it is to be understood in particular that the object fulfills and carries out this certain function in at least one application state and/or operation state In this context, by a "fuel cell unit" is to be understood a unit with at least one fuel cell, which is provided for converting at least a chemical reaction energy of at least one in particular continuously supplied fuel gas, in particular hydrogen and/or carbon monoxide, and at least one oxidizing agent, in particular oxygen from air, into electrical and/or thermal energy. The at least one fuel cell may be embodied in particular as a solid oxide fuel cell (SOFC). Preferably, the fuel cell unit comprises a plurality of fuel cells, which are in particular arranged in a fuel cell stack. In this context, a "desulfurization unit" is to be understood as a unit provided to reduce a volume and/or mole fraction of sulfur compounds in the fuel, in particular below a specified threshold value and preferably to remove a volume and/or mole fraction of sulfur compounds in the fuel at least substantially from the fuel, preferably by at least one physical and/or chemical adsorption and/or absorption process. In this context, a "reformer unit" in particular a chemical-technical unit is to be understood, which is provided for processing the fuel in particular for generating a fuel gas containing gas mixture, in particular by partial oxidation and/or by an autothermal reforming and/or preferably by steam reforming. Preferably, the reformer unit is embodied as a steam reformer unit. In this context, a "steam reformer unit" is to be understood in particular as a reformer unit provided to process the fuel by addition of water vapor for generating the fuel gas containing gas mixture. In particular, the fuel cell device comprises a water supply unit which is provided for supplying water to the reformer unit during a normal operation of the fuel cell unit. In this context, by a "water supply unit" is to be understood in particular a unit, which is provided for supplying water which is required for a reforming process to the reformer unit. During normal operation of the fuel cell unit the water supply unit is provided for supplying water continuously to the reformer unit. In particular, the water supply unit comprises at least one water supply pump provided for in particular continuous conveyance of the water. The water supply unit in particular comprises at least one vaporizer, which is fluidically arranged upstream of the reformer unit and which is provided for vaporizing the supplied water.

In this context, by a "noxious gas" is to be understood in particular a gaseous substance, which is able to damage and/or destroy at least one unit and/or component of the fuel cell device if the gaseous substance is led into said unit and/or component. In particular, the noxious gas is methane or a methane containing gas mixture. In particular, during a normal operation of the fuel cell unit materials of the desulfurization unit may absorb methane. When shutting down the fuel cell unit, e.g. in case of an emergency shutdown, the absorbed methane may be desorbed, which may lead to a coking of the reformer unit and/or the fuel cell unit if the methane streams into the reformer unit/or the fuel cell unit. In particular, this may occur if no water or an insufficient amount of water is supplied to the reformer unit.

By the desulfurization unit being provided for "at least limiting" a transfer of the noxious gas from the desulfurization unit into the reformer unit and/or into the fuel cell unit at least when shutting down the fuel cell unit it is in particular to be understood that the desulfurization unit is provided to reduce the amount of the noxious gas streaming from the desulfurization unit into the reformer unit and/or into the fuel cell unit or preferably completely prevent a transfer of noxious gas from the desulfurization unit into the reformer unit and/or into the fuel cell unit. In particular, a limitation of a transfer of the noxious gas from the desulfurization unit into the reformer unit and/or into the fuel cell unit may be achieved by reducing the amount of noxious gas desorbed from materials of the desulfurization unit, by redirecting a noxious gas flow and/or by blocking a noxious gas flow.

By such an implementation a fuel cell device, having advantageous operative features, in particular an enhanced shut down behavior, can be provided. By limiting a transfer of at least one noxious gas from the desulfurization unit into the reformer unit and/or into the fuel cell unit at least when shutting down the fuel cell unit, coking of the reformer unit and/or the fuel cell unit can be advantageously reduced or preferably advantageously avoided.

The desulfurization unit comprises at least one outlet valve, which is fluidically arranged between the desulfurization unit and the reformer unit and which is provided to be closed when shutting down the fuel cell unit. The outlet valve is in particular arranged within a fluid line, which connects an outlet of the desulfurization unit with a supply line of the reformer unit. In particular, the outlet valve is provided to be closed automatically when shutting down the fuel cell unit. The outlet valve is in particular embodied as a shut off valve. Preferably, the outlet valve is embodied electro-magnetically actuatable. Preferably, the outlet valve is embodied normally closed. Preferably, each outlet valve of the desulfurization unit is embodied normally closed. In particular, the outlet valve is kept open during a normal operation of the fuel cell unit by electrical power provided by the fuel cell unit. When shutting down the fuel cell unit a power supply of the outlet valve is in particular automatically interrupted. Hereby, a noxious gas flow from the desulfurization unit towards the reformer unit and/or the fuel cell unit can be advantageously prevented when shutting down the fuel cell unit.

It is moreover proposed that the desulfurization unit comprises at least one drain valve, which is provided to be opened for draining the noxious gas from the desulfurization unit when shutting down the fuel cell unit. The drain valve is in particular arranged within a fluid line which connects an outlet of the desulfurization unit with at least one flue line of the fuel cell device. In particular, the drain valve is provided to be opened automatically when shutting down the fuel cell unit. The drain valve is in particular embodied as a shut off valve. Preferably, the drain valve is embodied electro-magnetically actuatable. Preferably, the drain valve is embodied normally open. Preferably, each drain valve of the desulfurization unit is embodied normally open. In particular, the drain valve is kept close during a normal operation of the fuel cell unit by electrical power provided by the fuel cell unit. When shutting down the fuel cell unit a power supply of the drain valve is in particular automatically interrupted. Hereby a noxious gas desorbed from the desulfurization unit towards the reformer unit and/or the fuel cell unit can be advantageously discharged from the desulfurization unit when shutting down the fuel cell unit.

It is moreover proposed that the desulfurization unit comprises at least two desulfurization reactors, which are connected parallel to each other and which are provided to be operated in alternation. In this context, by a "desulfurization reactor" is to be understood in particular a reaction container in which chemical and/or physical processes and/or reactions for a desulfurization of the fluidic fuel take place. By the desulfurization reactors being provided "to be operated in alternation" it is in particular to be understood that at each point in time during a normal operation of the fuel cell unit solely one of the desulfurization reactors is involved in a desulfurization of the fluidic fuel. In particular, at each point in time during a normal operation of the fuel cell unit a fluidic fuel flow is solely led towards one of the desulfurization reactors. Preferably, the desulfurization unit respectively comprises an inlet valve, an outlet valve and a drain valve for each desulfurization reactor. In particular, a changeover may be executed once, in particular when a service life end of the desulfurization reactor in use is reached. In addition or alternatively a changeover may be executed periodically, e.g. daily or monthly. In particular absorptive capacity respectively desorption capacity of each desulfurization reactor regarding the noxious gas is below a sufficient amount of the noxious gas for damaging and/or destroying the reformer unit and/or the fuel cell unit. Hereby, the amount of the noxious gas streaming from the desulfurization unit into the reformer unit and/or into the fuel cell unit when shutting down the fuel cell unit can be advantageously reduced.

It is further proposed that the inlet valve is embodied normally closed. Preferably, each inlet valve of the desulfurization unit is embodied normally closed. The inlet valve is in particular arranged within a fluid line which connects a fuel supply line of the fuel cell unit with an inlet of a desulfurization reactor. In particular, the inlet valve is provided to be closed automatically when shutting down the fuel cell unit. The inlet valve is in particular embodied as a shut off valve. Preferably, the inlet valve is embodied electro-magnetically actuatable. Preferably, the inlet valve is embodied normally closed. In particular the inlet valve is kept open during a normal operation by electrical power provided by the fuel cell unit. When shutting down the fuel cell unit a power supply of the inlet valve is in particular automatically interrupted. Hereby, a streaming of fluidic fuel into the desulfurization unit, especially into desulfurization reactors of the desulfurization unit can be advantageously interrupted when shutting down the fuel cell unit.

Furthermore, a fuel cell system is proposed with at least one fuel cell device according to the invention. Besides the fuel cell device the fuel cell system may comprise further components and/or units such as supply pipes for fuel and/or air, flue pipes, heat exchangers, compressors, catalytic converters, compressors, and/or afterburners. Hereby, a fuel cell system, having an enhanced shut down behavior, can be provided.

Further a method for operating a fuel cell device, which is provided to be operated with a fluidic fuel, with a desulfurization unit, which is provided to desulfurize the fuel at least partially, with a reformer unit, which is provided for generating at least one fuel gas, and with a fuel cell unit, wherein a transfer of at least one noxious gas from the desulfurization unit into the reformer unit and/or into the fuel cell unit is limited when shutting down the fuel cell unit, is provided. Hereby, coking of the reformer unit and/or the fuel cell unit can be advantageously reduced or preferably advantageously avoided.

The fuel cell device according to the invention is herein not to be restricted to the application and implementation described above. In particular, for fulfilling a function herein described, the fuel cell device according to the invention may comprise a number of individual elements, components and units, which differ from the number herein mentioned.

### Drawings

Further advantages may be gathered from the following description of the drawing. In the drawing two exemplary embodiments of the invention are shown. The drawing, the description and the claims comprise a plurality of features in combination. The person skilled in the art will expediently also consider the features individually and will bring them together in further purposeful combinations.

The drawing shows:

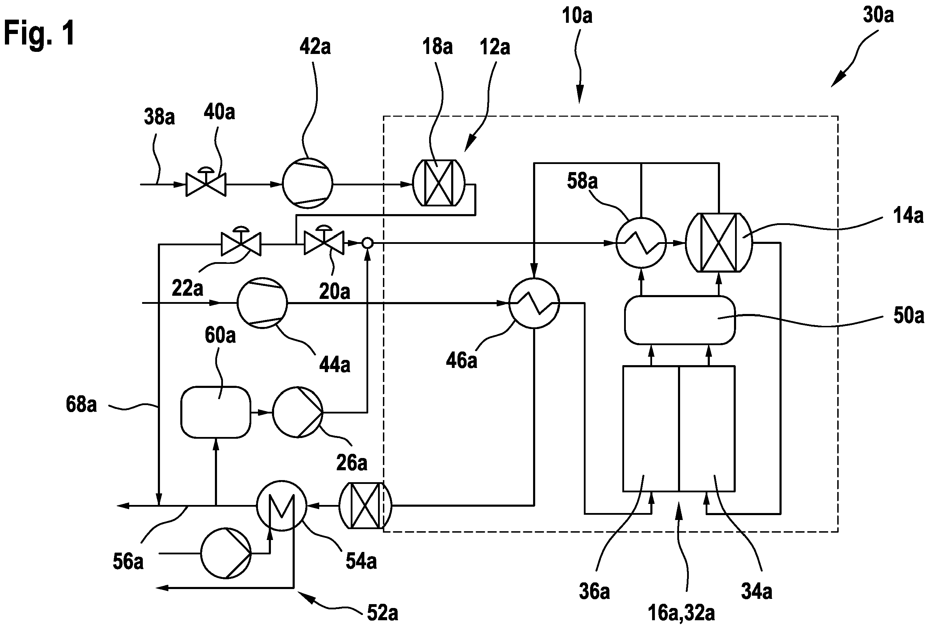

- In fig. 1: a schematic view of a fuel cell system with a fuel cell device comprising a reformer unit, a fuel cell unit and a desulfurization unit which is provided for preventing a transfer of a noxious gas from the desulfurization unit into the reformer unit and/or into the fuel cell unit when shutting down the fuel cell unit, and

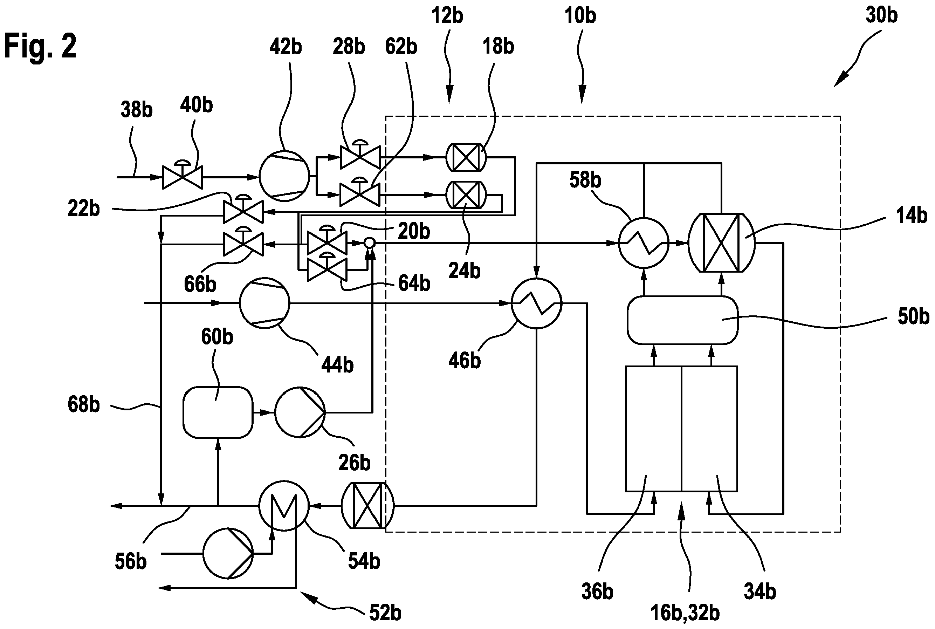

- In fig. 2: a schematic view of a fuel cell system with a fuel cell device comprising a reformer unit, a fuel cell unit and a desulfurization unit with two desulfurization reactors which are connected parallel to each other and which are provided to be operated in alternation.

### Description of the exemplary embodiments

Figure 1 shows a schematic view of a fuel cell system 30a. The fuel cell system 30a comprises a fuel cell device 10a, which is provided to be operated with a fluidic fuel, in particular with natural gas. Alternatively, it is also conceivable to operate the fuel cell device 10a with another hydrocarbon containing in particular gaseous fuel such as biogas. The fuel cell device 10a comprises a fuel cell unit 16a. The fuel cell unit 16a is shown here simplified as a single fuel cell 32a. However, a fuel cell unit embodied as a fuel cell stack comprising a plurality of fuel cells is expedient. The fuel cell 32a is preferably embodied as a solid oxide fuel cell. The fuel cell 32a has an anode 34a and a cathode 36a. From a fuel supply line 38a the fluidic fuel is fed to the fuel cell system 30a. Feed-in of the fluidic fuel can be controlled and/or regulated and/or entirely interrupted by a fuel valve 40a. The fuel valve 40a is preferably electro-magnetically actuatable. By means of a fuel compressor 42a a sufficient flow-rate of the fluidic fuel is ensured. Air is fed to a cathode 36a of the fuel cell unit 16a by means of a further compressor 44a or fan. Before entering the cathode 36a the air is preheated by a preheating unit 46a. Furthermore, the fuel cell device 10a comprises a desulfurization unit 12a. The desulfurization unit 12a is connected downstream of the fuel compressor 42a. The desulfurization unit 12a is provided to desulfurize the fluidic fuel. The fuel cell unit 10a further comprises a reformer unit 14a. The reformer unit 14a is provided for obtaining a hydrogen-rich fuel gas by processing the desulfurized fluidic fuel. The reformer unit 14a is embodied as a steam reformer unit. The hydrogen-rich gas leaving the reformer unit 14a is mainly fed to the anode 34a of the fuel cell unit 16a.

The fuel cell device 10a further comprises a water supply pump 26a. The water supply pump 26a is provided for supplying water to the reformer unit 14a. Before entering the reformer unit 14a the water supplied is vaporized by a vaporizer unit 58a. The water supply pump 26a is provided for continuously supplying water to the reformer unit 14a during a normal operation of the fuel cell unit 16a. The water supply pump 26a is provided for a continuous conveyance of the water from a water source 60a. The water conveyed by the water supply pump 26a is mixed with the desulfurized fluidic fuel leaving the desulfurization unit 12a. During a normal operation of the fuel cell unit 16a materials of the desulfurization unit 12a may absorb a noxious gas, especially methane. When shutting down the fuel cell unit 16a, e.g. in case of an emergency shutdown, the absorbed noxious gas may be desorbed, which may lead to a coking of the reformer unit 14a and/or the fuel cell unit 16a. To avoid coking of the reformer unit 14a and/or of the of fuel cell unit 16a by desorbed noxious gas the desulfurization unit 12a is provided for at least limiting a transfer of the noxious gas from the desulfurization unit 12a into the reformer unit 14a and/or into the fuel cell unit 16a when shutting down the fuel cell unit 16a.

The desulfurization unit 12a comprises a desulfurization reactor 18a and an outlet valve 20a. The outlet valve 20a is arranged between the desulfurization unit 12a and the reformer unit 14a. To prevent a transfer of the noxious gas from the desulfurization unit 12a into the reformer unit 14a and/or into the fuel cell unit 16a the outlet valve 20a is provided to be closed when shutting down the fuel cell unit 16a. The outlet valve 20a is embodied normally closed. Preferably, the outlet valve 20a is embodied electro-magnetically actuatable. In particular, the outlet valve 20a is kept open during a normal operation of the fuel cell unit 16a by electrical power provided by the fuel cell unit 16a. When shutting down the fuel cell unit 16a a power supply of the outlet valve 20a is automatically interrupted. Furthermore, the desulfurization unit 12a comprises a drain valve 22a, which is provided to be opened for draining the noxious gas from the desulfurization reactor 18a when shutting down the fuel cell unit 16a. The drain valve 22a is arranged within a fluid line 68a, which connects an outlet of the desulfurization reactor 18a with at least one flue line or chimney 56a of the fuel cell device 10a. In particular, the drain valve 22a is provided to be opened automatically when shutting down the fuel cell unit 16a. The drain valve 22a is in particular embodied as a shut off valve. Preferably, the drain valve 22a is embodied electro-magnetically actuatable. Preferably, the drain valve 22a is embodied normally open. In particular, the drain valve 22a is kept close during a normal operation of the fuel cell unit 16a by electrical power provided by the fuel cell unit 16a. When shutting down the fuel cell unit 16a a power supply of the drain valve 22a is automatically interrupted.

During normal operation of the fuel cell unit 16a an exhaust gas of the anode 34a and air from the cathode 36a of the fuel cell unit 16a are fed to a combustion unit 50a in which an afterburning of combustible components remaining in the anode exhaust gas is effected. Thermal energy herein released is transferred, for example to a heating water circulation 52a via a heat exchanger 54a, to the reformer unit 14a, to the preheating unit 46a and/or to the vaporizer unit 58a. An exhaust gas is discharged via the chimney 56a.

Figure 2 shows a further exemplary embodiment of the invention. The following descriptions and the drawings are essentially limited to the differences between the embodiments, wherein regarding equally designated components, in particular with regard to components with the same reference numerals, reference can be made to the drawings and/or the description of the embodiment of figure 1. To distinguish the exemplary embodiments the letter a is attached to the reference numerals of the embodiment of figure 1. In the exemplary embodiment of figure 2 the letter a is replaced by the letter b.

Figure 2 shows a schematic view of a fuel cell system 30b. The fuel cell system 30b comprises a fuel cell device 10b, which is provided to be operated with a fluidic fuel, in particular with natural gas. Alternatively, it is also conceivable to operate the fuel cell device 10b with another hydrocarbon containing in particular gaseous fuel such as biogas. The fuel cell device 10b comprises a fuel cell unit 16b. The fuel cell unit 16b is shown here simplified as a single fuel cell 32b. However, a fuel cell unit embodied as a fuel cell stack comprising a plurality of fuel cells is expedient. The fuel cell 32b is preferably embodied as a solid oxide fuel cell. The fuel cell 32b has an anode 34b and a cathode 36b. From a fuel supply line 38b the fluidic fuel is fed to the fuel cell system 30b. Feed-in of the fluidic fuel can be controlled and/or regulated and/or entirely interrupted by a fuel valve 40b. The fuel valve 40b is preferably electro-magnetically actuatable. By means of a fuel compressor 42b a sufficient flow-rate of the fluidic fuel is ensured. Air is fed to a cathode 36b of the fuel cell unit 16b by means of a further compressor 44b or fan. Before entering the cathode 36b the air is preheated by a preheating unit 46b. Furthermore, the fuel cell device 10b comprises a desulfurization unit 12b. The desulfurization unit 12b is connected downstream of the fuel compressor 42b. The desulfurization unit 12b is provided to desulfurize the fluidic fuel. The fuel cell unit 10b further comprises a reformer unit 14b. The reformer unit 14b is provided for obtaining a hydrogen-rich fuel gas by processing the desulfurized fluidic fuel. The reformer unit 14b is embodied as a steam reformer unit. The hydrogen-rich gas leaving the reformer unit 14b is mainly fed to the anode 34b of the fuel cell unit 16b.

The fuel cell device 10b further comprises a water supply pump 26b. The water supply pump 26b is provided for supplying water to the reformer unit 14b. Before entering the reformer unit 14b the water supplied is vaporized by a vaporizer unit 58b. The water supply pump 26b is provided for continuously supplying water to the reformer unit 14b during a normal operation of the fuel cell unit 16b. The water supply pump 26b is provided for a continuous conveyance of the water from a water source 60b. The water conveyed by the water supply pump 26b is mixed with the desulfurized fluidic fuel leaving the desulfurization unit 12b. During a normal operation of the fuel cell unit 16b materials of the desulfurization unit 12b may absorb a noxious gas, especially methane. When shutting down the fuel cell unit 16b, e.g. in case of an emergency shutdown, the absorbed noxious gas may be desorbed, which may lead to a coking of the reformer unit 14b and/or of the fuel cell unit 16b. To avoid coking of the reformer unit 14a and/or of the fuel cell unit 16b by desorbed noxious gas the desulfurization unit 12b is provided for at least limiting a transfer of the noxious gas from the desulfurization unit 12b into the reformer unit 14b and/or into the fuel cell unit 16b when shutting down the fuel cell unit 16b.

The desulfurization unit 12b comprises two desulfurization reactors 18b, 24b, which are connected parallel to each other and which are provided to be operated in alternation. At each point in time during a normal operation of the fuel cell unit 16b solely one of the desulfurization reactors 18b, 24b is involved in a desulfurization of the fluidic fuel. In particular, at each point in time during a normal operation of the fuel cell unit 16b a fluidic fuel flow is solely led towards one of the desulfurization reactors 18b, 24b. The desulfurization unit 12b respectively comprises an inlet valve 28b, 62b, an outlet valve 20b, 64b and a drain valve 22b, 66b for each desulfurization reactor. In particular, a changeover may be executed once, in particular when a service life end of the desulfurization reactor 18b, 24b in use is reached. In addition or alternatively, a changeover may be executed periodically, e.g. daily or monthly. An absorptive capacity respectively desorption capacity of each desulfurization reactor 18b, 24b regarding the noxious gas is below a sufficient amount of the noxious gas for damaging and/or destroying the reformer unit 14b and/or the fuel cell unit 16b. Hereby, the amount of the noxious gas streaming from the desulfurization unit 12b into the reformer unit 14b and/or into the fuel cell unit 16b when shutting down the fuel cell unit 16b can be advantageously reduced.

During normal operation of the fuel cell unit 16a an exhaust gas of the anode 34a and air from the cathode 36a of the fuel cell unit 16a are fed to a combustion unit 50a in which an afterburning of combustible components remaining in the anode exhaust gas is effected. Thermal energy herein released is transferred, for example to a heating water circulation 52a via a heat exchanger 54a, to the reformer unit 14a, to the preheating unit 46a and/or to the vaporizer unit 58a. An exhaust gas is discharged via a chimney 56a.

## Claims

1. Fuel cell device, which is provided to be operated with a fluidic fuel, with a desulfurization unit (12a; 12b), which is provided to desulfurize the fuel at least partially, with a reformer unit (14a; 14b), which is provided for generating at least one fuel gas, and with a fuel cell unit (16a; 16b), whereby the desulfurization unit (12a; 12b) is provided to reduce an amount of a noxious gas streaming from the desulfurization unit (12a; 12b) into the reformer unit (14a; 14b) and/or into the fuel cell unit (16a; 16b) or completely prevent a transfer of noxious gas from the desulfurization unit (12a; 12b) into the reformer unit (14a; 14b) and/or into the fuel cell unit (16a; 16b)at least when shutting down the fuel cell unit (16a; 16b) **characterized in that** the desulfurization unit (12a; 12b) comprises at least one outlet valve (20a; 20b, 64b), which is arranged between the desulfurization unit (12a; 12b) and the reformer unit (14a; 14b) and which is provided to be closed when shutting down the fuel cell unit (16a; 16b).

2. The fuel cell device according to claim 1, **characterized in that** the outlet valve (20a) is embodied normally closed.

3. Fuel cell device according to one of the preceding claims, **characterized in that** the desulfurization unit (12a) comprises at least one drain valve (22a), which is provided to be opened for draining the noxious gas from the desulfurization unit (12a) when shutting down the fuel cell unit (16a).

4. Fuel cell device according to claim 3, **characterized in that** the drain valve (22a) is embodied normally open.

5. Fuel cell device according to one of the preceding claims, **characterized in that** the desulfurization unit (12b) comprises at least two desulfurization reactors (18b, 24b), which are connected parallel to each other and which are provided to be operated in alternation.

6. Fuel cell device according to claim 5, **characterized in that** the desulfurization unit (12a; 12b) respectively comprises an inlet valve (28b, 62b), an outlet valve (20b, 64b) and a drain valve (22b, 66b) for each desulfurization reactor (18b, 24b).

7. Fuel cell device according to claim 6, **characterized in that** the inlet valve (28b, 62b) is embodied normally closed.

8. Fuel cell system with at least one fuel cell device (10a; 10b) according to one of the preceding claims.

9. Method for operating a fuel cell device, which is provided to be operated with a fluidic fuel, with a desulfurization unit (12a; 12b), which is provided to desulfurize the fuel at least partially, with a reformer unit (14a; 14b), which is provided for generating at least one fuel gas, and with a fuel cell unit (16a; 16b),whereby the desulfurization unit (12a; 12b) is provided to reduce an amount of a noxious gas streaming from the desulfurization unit (12a; 12b) into the reformer unit (14a; 14b) and/or into the fuel cell unit (16a; 16b) or completely prevent a transfer of noxious gas from the desulfurization unit (12a; 12b) into the reformer unit (14a; 14b) and/or into the fuel cell unit (16a; 16b) at least when shutting down the fuel cell unit (16a; 16b), **characterized in that** at least one outlet valve (20a; 20b, 64b) of the desulfurization unit (12a; 12b), which is arranged between the desulfurization unit (12a; 12b) and the reformer unit (14a; 14b), is being closed when shutting down the fuel cell unit (16a; 16b).

## Patentansprüche

1. Brennstoffzellenvorrichtung, welche zum Betrieb mit einem fluidischen Brennstoff vorgesehen ist,
mit einer Entschwefelungseinheit (12a; 12b), die zu einer zumindest teilweisen Entschwefelung des Brennstoffs vorgesehen ist,
mit einer Reformereinheit (14a; 14b), die zur Erzeugung von zumindest einem Brenngas vorgesehen ist, und
mit einer Brennstoffzelleneinheit (16a; 16b),
wobei die Entschwefelungseinheit (12a; 12b) dazu vorgesehen ist, eine Menge eines von der Entschwefelungseinheit (12a; 12b) in die Reformereinheit (14a; 14b) und/oder in die Brennstoffzelleneinheit (16a; 16b) strömenden Schadgases zu reduzieren oder einen Transfer von Schadgas von der Entschwefelungseinheit (12a; 12b) in die Reformereinheit (14a; 14b) und/oder in die Brennstoffzelleneinheit (16a; 16b) zumindest beim Abschalten der Brennstoffzelleneinheit (16a; 16b) vollständig zu verhindern,
**dadurch gekennzeichnet, dass** die Entschwefelungseinheit (12a; 12b) mindestens ein Auslassventil (20a; 20b) aufweist, welches zwischen der Entschwefelungseinheit (12a; 12b) und der Reformereinheit (14a; 14b) angeordnet ist und welches dazu vorgesehen ist, beim Abschalten der Brennstoffzelleneinheit (16a; 16b) geschlossen zu sein.

2. Brennstoffzellenvorrichtung nach Anspruch 1, **dadurch gekennzeichnet, dass** das Auslassventil (20a) normalerweise geschlossen ausgebildet ist.

3. Brennstoffzellenvorrichtung nach einem der vorhergehenden Ansprüche, **dadurch gekennzeichnet, dass** die Entschwefelungseinheit (12a) zumindest ein Ablassventil (22a) aufweist, welches dazu vorgesehen ist, beim Abschalten der Brennstoffzelleneinheit (16a) geschlossen zu sein, um das Schadgas aus der Entschwefelungseinheit (12a) ausströmen zu lassen.

4. Brennstoffzellenvorrichtung nach Anspruch 3, **dadurch gekennzeichnet, dass** das Ablassventil (22a) normalerweise geöffnet ausgebildet ist.

5. Brennstoffzellenvorrichtung nach einem der vorhergehenden Ansprüche, **dadurch gekennzeichnet, dass** die Entschwefelungseinheit (12b) mindestens zwei Entschwefelungsreaktoren (18b, 24b) aufweist, welche miteinander parallel geschaltet sind und welche dazu vorgesehen sind, abwechselnd betrieben zu werden.

6. Brennstoffzellenvorrichtung nach Anspruch 5, **dadurch gekennzeichnet, dass** die Entschwefelungseinheit (12a; 12b) jeweils ein Einlassventil (28b, 62b), ein Auslassventil (20b, 64b) und ein Ablassventil (22b, 66b) für jeden Entschwefelungsreaktor (18b, 24b) aufweist.

7. Brennstoffzellenvorrichtung nach Anspruch 6, **dadurch gekennzeichnet, dass** das Einlassventil (28b, 62b) normalerweise geschlossen ausgebildet ist.

8. Brennstoffzellensystem mit zumindest einer Brennstoffzellenvorrichtung (10a; 10b) nach einem der vorhergehenden Ansprüche.

9. Verfahren zum Betrieb einer Brennstoffzellenvorrichtung, welche zum Betrieb mit einem fluidischen Brennstoff vorgesehen ist,
mit einer Entschwefelungseinheit (12a; 12b), die zu einer zumindest teilweisen Entschwefelung des Brennstoffs vorgesehen ist,
mit einer Reformereinheit (14a; 14b), die zur Erzeugung von zumindest einem Brenngas vorgesehen ist, und
mit einer Brennstoffzelleneinheit (16a; 16b),
wobei die Entschwefelungseinheit (12a; 12b) dazu vorgesehen ist, eine Menge eines von der Entschwefelungseinheit (12a; 12b) in die Reformereinheit (14a; 14b) und/oder in die Brennstoffzelleneinheit (16a; 16b) strömenden Schadgases zu reduzieren oder einen Transfer von Schadgas von der Entschwefelungseinheit (12a; 12b) in die Reformereinheit (14a; 14b) und/oder in die Brennstoffzelleneinheit (16a; 16b) zumindest beim Abschalten der Brennstoffzelleneinheit (16a; 16b) vollständig zu verhindern,
**dadurch gekennzeichnet, dass** zumindest ein Auslassventil (20a; 20b, 64b) der Entschwefelungseinheit (12a; 12b), welches zwischen der Entschwefelungseinheit (12a; 12b) und der Reformereinheit (14a; 14b) angeordnet ist, beim Abschalten der Brennstoffzelleneinheit (16a; 16b) geschlossen wird.

## Revendications

1. Dispositif de pile à combustible prévu à être opéré avec un combustible fluidique, avec une unité à désulfurisation (12a ; 12b), qui est prévue pour une au moins partielle désulfurisation du combustible,
avec une unité à reformage (14a ; 14b), qui est prévue à générer au moins un gaz combustible,
et avec une unité pile à combustible (16a ; 16b),
l'unité à désulfurisation (12a ; 12b) étant prévue à réduire une quantité de gaz nocif passant de l'unité à désulfurisation (12a ; 12b) dans l'unité à reformage (14a ; 14b) et/ou dans l'unité pile à combustible (16a ; 16b) ou à complètement empêcher un transfert de gaz nocif de l'unité à désulfurisation (12a ; 12b) dans l'unité à reformage (14a ; 14b) et/ou dans l'unité pile à combustible (16a ; 16b) au moins lors d'une fermeture de l'unité pile à combustible (16a ; 16b),
**caractérisé en ce que** l'unité à désulfurisation (12a ; 12b) comporte au moins une soupape de sortie (20a ; 20b, 64b) disposée entre l'unité à désulfurisation (12a ; 12b) et l'unité à reformage (14a ; 14b) et prévu à être fermée lors d'une fermeture de l'unité pile à combustible (16a ; 16b).

2. Dispositif de pile à combustible selon la revendication 1, **caractérisé en ce que** la soupape de sortie (20a) est réalisée normalement fermée.

3. Dispositif de pile à combustible selon l'une quelconque des revendications précédentes, **caractérisé en ce que** l'unité à désulfurisation (12a) comporte au moins une soupape de vidange (22a) prévue à être ouverte pour faire passer le gaz nocif de l'unité à désulfurisation (12a) lors d'une fermeture de l'unité pile à combustible (16a).

4. Dispositif de pile à combustible selon la revendication 3, **caractérisé en ce que** la soupape de vidange (22a) est réalisée normalement ouverte.

5. Dispositif de pile à combustible selon l'une quelconque des revendications précédentes, **caractérisé en ce que** l'unité à désulfurisation (12b) comporte au moins deux réacteurs désulfurants (18b, 24b) raccordés l'un en parallèle à l'autre et prévus à être opérés en alternance.

6. Dispositif de pile à combustible selon la revendication 5, **caractérisé en ce que** l'unité à désulfurisation (12a ; 12b) comporte respectivement une soupape d'entrée (28b, 62b), une soupape de sortie (20b, 64b) et une soupape de vidange (22b, 66b) pour chaque réacteur désulfurant (18b, 24b).

7. Dispositif de pile à combustible selon la revendication 6, **caractérisé en ce que** la soupape d'entrée (28b, 62b) est réalisée normalement fermée.

8. Système pile à combustible avec au moins un dispositif de pile à combustible (10a ; 10b) selon l'une quelconque des revendications précédentes.

9. Procédé pour fonctionnement d'un dispositif de pile à combustible, prévu à être opéré avec un combustible fluidique,
avec une unité à désulfurisation (12a ; 12b), qui est prévue pour une au moins partielle désulfurisation du combustible,
avec une unité à reformage (14a ; 14b), qui est prévue à générer au moins un gaz combustible,
et avec une unité pile à combustible (16a ; 16b),
l'unité à désulfurisation (12a ; 12b) étant prévue à réduire une quantité de gaz nocif passant de l'unité à désulfurisation (12a ; 12b) dans l'unité à reformage (14a ; 14b) et/ou dans l'unité pile à combustible (16a ; 16b) ou à complètement empêcher un transfert de gaz nocif de l'unité à désulfurisation (12a ; 12b) dans l'unité à reformage (14a ; 14b) et/ou dans l'unité pile à combustible (16a ; 16b) au moins lors d'une fermeture de l'unité pile à combustible (16a ; 16b),
**caractérisé en ce qu'**au moins une soupape de sortie (20a ; 20b, 64b) de l'unité à désulfurisation (12a ; 12b), laquelle est disposée entre l'unité à désulfurisation (12a ; 12b) et l'unité à reformage (14a ; 14b), est fermée lors d'une fermeture de l'unité pile à combustible (16a ; 16b).
